# EUROPÄISCHE PATENTSCHRIFT

(11) **EP 0 784 558 B1**
(45) Veröffentlichungstag und Bekanntmachung des Hinweises auf die Patenterteilung: **07.01.1999**
(21) Anmeldenummer: 95936465.4
(22) Anmeldetag: 10.10.1995
(51) Int. Cl.: B62D 21/09

(54) **BLECHBAUTEIL**
SHEET-METAL COMPONENT
ELEMENT EN TOLE

(30) Priorität: 15.10.1994 DE 4436882
(43) Veröffentlichungstag der Anmeldung: 23.07.1997
(73) Patentinhaber: Sima-Tec Singer-Mayr GmbH, 70499 Stuttgart (DE)
(72) Erfinder: SINGER, Otto, D-78549 Spaichingen (DE); WIEDEN, Gerhard, D-71034 Böblingen (DE); EPPLE, Günter, D-72108 Rottenburg (DE); MAU, Hans-Jürgen, D-71065 Sindelfingen (DE)
(74) Vertreter: Hoeger, Stellrecht & Partner
(86) Internationale Anmeldenummer: EP9503991
(87) Internationale Veröffentlichungsnummer: WO9611832

(56) Entgegenhaltungen:
- FR-A- 759 949
- FR-A- 2 711 559
- US-A- 1 893 721
- US-A- 4 234 217
- PATENT ABSTRACTS OF JAPAN vol. 007 no. 283 (M-263) ,16.Dezember 1983 & JP,A,58 159990 (TOKYO SHIBAURA DENKI KK) 22.September 1983,

## Beschreibung

Die Erfindung betrifft Blechbauteile, insbesondere Kfz-Karosserieteile mit lasttragender oder lastaufnehmender Funktion. Die Blechdicke eines Karosseriebauteils wird u.a. durch die auf das Bauteil bei seinem bestimmungsgemäßen Gebrauch wirkenden äußeren Kräfte bestimmt. In den meisten Fällen machen die am stärksten belasteten Bereiche des Karosserieblechbauteiles allerdings nur einen Bruchteil der gesamten Bauteilfläche aus. Diese besonders belasteten Bereiche hoher Beanspruchung sind in der Mehrzahl der Fälle Krafteinleitungszonen.

Durch die bisher notwendige Auslegung der Blechdicke des Karosseriebauteils auf die nur in wenigen Bereichen auftretende hohe Beanspruchung ist nicht nur ein zusätzlicher Materialeinsatz vorhanden, sondern dieser zusätzliche Materialeinsatz bedingt bei der Herstellung auch einen höheren technischen Aufwand und führt so zu höheren Herstellungskosten. Darüber hinaus weist das Bauteil auch noch ein relativ hohes Gewicht auf.

In der Praxis wurde versucht, bei den eingangs beschriebenen Blechbauteilen eine relativ geringe Grundblechdicke zu realisieren, indem eine höhere Festigkeit und/oder Steifigkeit in Bereichen mit höherer Beanspruchung gegeben wird. Dies reduziert den technischen Aufwand und auch den zusätzlichen Materialeinsatz nur auf die Bereiche, in denen es unbedingt erforderlich ist. Hierbei wurden insbesondere zwei Lösungswege beschritten:
a) Zur Steigerung der Festigkeit und Steifigkeit wird eine zusätzliche Formgebung des Bauteils (Versteifungssicken, Topfbildung, etc.) notwendig, um die höher belasteten Bereiche zu stabilisieren. Dieser Möglichkeit sind jedoch Grenzen gesetzt, wenn in Bereichen hoher Belastung wegen anderer Anforderungen spezielle Auflageflächen (z.B. ebene Auflageflächen) erforderlich sind oder die höher belasteten Zonen in ihrer Ausdehnung sehr klein sind (z.B. Krafteinleitungszonen der vorderen und hinteren Stoßdämpferbeine, sofern diese direkt mit der Karosserie verbunden sind). Allerdings benötigt eine ausreichende Erhöhung der Festigkeit und/oder Steifigkeit meist eine aufwendige Formgebung des Bauteils.
b) Verstärkung der Grundblechdicke mit zusätzlichen Blechteilen in Form von profilierten oder gesickten Verstärkungen und Dopplern, und diese werden mit dem Grundblechbauteil durch Schweißen, Durchsetzfügen, Kleben, etc. verbunden und tragen so zur Steigerung der Festigkeit und/oder Steifigkeit bei. Allerdings erweisen sich oft die Verbindungsbereiche von Grundblechteil und zusätzlichem Blechteil als zusätzliche Schwachstellen, die entsprechend optimiert werden müssen. Die zusätzlichen Blechteile müssen darüber hinaus häufig an komplizierte Bauteilkonturen angepaßt werden und erhöhen somit die Fertigungskosten oder sind teilweise in den gewünschten Einsatzbereichen nicht verwendbar, da bereits andere Bauteile eine sinnvolle Anbindung der zusätzlichen Blechteile behindern. Da außerdem ein zusätzliches Blechteil nicht homogen mit dem zu verstärkenden Bauteil verbunden werden kann, wird die denkbare Wirkung des zusätzlichen Blechteiles nicht ausgeschöpft.

Daneben wird in der DE 41 04 256 A1 empfohlen, Funktionsteile und komplementäre Ausnehmungen in den Trägerteilen in einem Arbeitsschritt herzustellen, wobei ein zur Oberfläche in einem von 90° abweichenden Winkel gerichteter Laserstrahl verwendet wird. Das Funktionsteil wird in die komplementäre Ausnehmung unter Belassung eines Fügespalts eingesetzt, welcher verwendet wird, um bei dem nachfolgenden Laserschweißprozeß den Laserstrahl einzukoppeln. Nachteilig ist hier die dicke Schweißnaht, die in der Regel Nachbearbeitungen nötig macht, und vor allem die Tatsache, daß sich mit diesem Verfahren keine Bauteile mit exakt vordefinierbarer geometrischer Lage von Trägerteil zu Funktionsteil herstellen lassen.

Die Erfindung stellt sich die Aufgabe, ein verbessertes Blechbauteil zu schaffen, das vorstehende Nachteile vermeidet.

Diese Aufgabe wird bei einem Blechbauteil der eingangs beschriebenen Art erfindungsgemäß gelöst, welches unabhängig voneinander hergestellte Träger- und Funktionsteile umfaßt, wobei das Trägerteil eine Ausnehmung zur Aufnahme eines hierzu komplementär ausgebildeten Montageabschnitts des Funktionsteiles umfaßt, wobei die sich im zusammengebauten Zustand des Blechbauteiles gegenüberliegenden Wandungen der Ausnehmung und des Montageabschnitts im wesentlichen senkrecht zur die Ausnehmung umgebenden Oberfläche des Trägerteils angeordnet sind, wobei die Abmessungen der Ausnehmung und des Montageabschnitts so bemessen sind, daß das Funktionsteil mit seinem Montageabschnitt unverlierbar und fügespaltlos in die Ausnehmung des Trägerteils einpreßbar ist, und wobei das Funktionsteil mit dem Trägerteil im Bereich ihrer sich gegenüberliegenden Wandungen von Montageabschnitt und Ausnehmung laser- oder elektronenstrahlverschweißt ist.

Die senkrechte Anordnung der Wandungen ist wichtig für die unverlierbare und fügespaltlose Einpressung des Montageabschnitts in die Ausnehmung des Trägerteils. Nur wenn sichergestellt ist, daß das Funktionsteil in das Trägerteil fügespaltlos einpreßbar ist, läßt sich bei dem nachfolgenden Laser- oder Elektronenstrahlschweißen eine Verbindung zwischen Trägerteil und Funktionsteil herstellen, welche vergleichbar ist mit der Festigkeit eines einstückigen Materials selbst.

Dadurch, daß Trägerteil und Funktionsteil unabhängig voneinander herstellbar sind, kann die Blechdicke des Trägerteils so weit minimiert werden, als es für dessen Trägerfunktion möglich ist, während bei dem Funktionsteil eine Blechdicke gewählt wird, die der Funktion des Funktionsteils gerecht wird.

Gleichzeitig erlaubt diese Konstruktion eine größere Standardisierung in der Fertigung der Funktionsteile, die in unterschiedlichen Trägerteilen verwendet werden können.

Darüber hinaus haben die erfindungsgemäßen Blechbauteile den Vorteil, daß ihre Geometrie, d.h. die geometrische Position des Funktionsteils gegenüber dem Trägerteil, exakt vorausbestimmbar ist, da durch das Einpressen des Funktionsteils mit seinem Montageabschnitt in unverlierbarer und fügespaltloser Weise in die Ausnehmung des Trägerteils sichergestellt ist, daß das Funktionsteil in der Ausnehmung des Trägerteils unverrückbar auch während des Laser- oder Elektronenstrahl-Schweißvorganges gehalten ist. Dies führt zu einer deutlichen Qualitätssteigerung der hergestellten Blechbauteile gegenüber den Fällen, in denen mit einem Fügespalt gearbeitet wird.

Vorzugsweise sind die Abmessungen der Ausnehmung und des Montageabschnitts so bemessen, daß deren sich gegenüberliegende Wandungen ganzflächig aneinander anliegen. Hierdurch erhält man einen besonders festen Halt des in das Trägerteil eingesetzten Funktionsteils und eine besonders gute Zentrierung bei der nachfolgenden Laser- oder Elektronenstrahlschweißung. Darüber hinaus läßt sich auch eine großflächige Verbindung zwischen Trägerteil und Funktionsteil schaffen.

Andererseits lassen sich durch eine nicht vollständige Verschweißung entlang der Wandungen von Montageabschnitt und Ausnehmung gezielt Sollbruchstellen mit definierter Ausreißkraft definieren.

Bevorzugt werden die Abmessungen der Ausnehmung und des Montageabschnitts so bemessen, daß das Funktionsteil im Preßsitz in dem Trägerteil mit einer Vorspannung gehalten wird, derart, daß beim Aufschmelzen der den gegenüberliegenden Wandungen von Ausnehmung und Montageabschnitt benachbarten Bauteilbereiche während des Verschweißvorganges die geometrische Lage des Funktionsteils gegenüber dem Trägerteil exakt erhalten bleibt.

Bei den erfindungsgemäßen Bauteilen läßt sich einerseits eine höhere Festigkeit bzw. Steifigkeit des Funktionsteiles durch eine entsprechende Auswahl eines höherwertigen Materials gegenüber dem Material des Trägerteils erreichen oder aber auch durch eine Erhöhung der Wandstärke des Montageabschnitts/Funktionsteils gegenüber der Wandstärke des Trägerteils erzielen. Hierbei kann problemlos die größere Wandstärke des Montageabschnitts mit der geringeren Wandstärke des Trägerteils fest verbunden werden.

Eine zusätzliche Erhöhung der Festigkeit der Verbindung zwischen Trägerteil und Funktionsteil wird dann erhalten, wenn die Ausnehmung im Trägerteil einen angestellten, zumindest teilweise umlaufenden Bund umfaßt. Vorzugsweise wird der Bund so weit angestellt, daß die Dicke des Trägerteils einschließlich der Höhe des Bundes der Dicke des Montageabschnitts des Funktionsteils entspricht. Der Anstellwinkel des Bundes ist hierbei vorzugsweise 90°, wobei bei Bedarf ein nahezu fließender Übergang zum Bereich erhöhter Blechdicke realisierbar ist.

Die Ausnehmung des Trägerteils, gegebenenfalls auch der angestellte Bund, kann eine zur Öffnung hinweisende Fase aufweisen, die zur Führung des Laser- oder Elektronenstrahls beim Durchführen des Schweißvorgangs dient. Zusätzlich kann auch das Funktionsteil entlang seines Umfangs an der dem Laser- oder Elektronenstrahl zugewandten Seite mit einer umlaufenden Fase versehen sein, welche zusammen mit der Fase des Trägerteils eine in sich geschlossene rinnenförmige Schweißbadaufnahme bildet. Die Schweißbadaufnahme nimmt beim Schweißvorgang verflüssigtes Material auf und verhindert einen über die Oberfläche von Träger- und/oder Funktionsteil hinausstehende Schweißnahtverbindung.

Die Abmessungen der Fasen bzw. der daraus gebildeten Schweißbadaufnahme wird auf die jeweilige Blechdicke von Träger- und Funktionsteil abgestimmt.

Wird als Funktionsteil eine Tube in das Trägerteil eingeschweißt, so werden die Fasen vorzugsweise auf der der Tube abgewandten Seite des Bauteils angeordnet. So wird eine plane Verbindung der zu verbindenden Elemente gewährleistet, was ein planes Aufliegen des Bauteils möglich macht.

Das Blechbauteil kann nach dem Zusammenfügen und Verschweißen von Träger- und Funktionsteil in einem Werkzeug verformt werden. Es kann aber auch vorgesehen sein, daß das Trägerteil des Blechbauteils zuvor bereits seine endgültige Form erhält, so daß als letzter Herstellschritt das Einpressen des Funktionsteils und Verschweißen mit dem Trägerteil durchgeführt wird.

Das Funktionsteil selbst kann wiederum aus zwei oder mehreren separat hergestellten Teilen, wie für das Blechbauteil selbst zuvor beschrieben, zusammengesetzt sein. Selbstverständlich kann das Trägerteil nicht nur eine Ausnehmung und ein Funktionsteil aufnehmen, sondern von diesen zwei oder mehrere besitzen.

Vorzugsweise ist das Funktionsteil mit dem Trägerteil gasdicht verschweißt.

Die Einsatzorte der erfindungsgemäßen Blechbauteile liegen vor allem im Bereich der Blechleichtbaukonstruktion, d.h. bei Fahrzeugen aller Art, im allgemeinen Maschinenbau, etc., wo örtlich hohe Belastungen auf ein Bauteil einwirken und eine Materialanhäufung im Sinne einer höheren Blechdicke erwünscht ist. Im Pkw-Karosserierohbau sind dies primär die Aufnahmepunkte der Rohbaukarosserie für alle Anbauaggregate, wie z.B. Fahrwerk, Motor, Getriebe, Abgasanlage etc.

Dabei erlaubt die Erfindung, auf zusätzliche Verstärkungen oder Doppler sowie auf eine erheblich höhere Blechdicke zur Erzielung ausreichender Festigkeiten und Steifigkeiten zu verzichten.

Ein gezielter Materialeinsatz und damit eine gewichtsoptimierte Leichtbauweise wird ermöglicht.

Im Bereich örtlich höherer Blechdicken kann ein anderes optimiertes, verschweißbares Material als das bei dem Trägerteil verwendete Grundmaterial verwendet werden; so kann z.B. höherfestes Blech in einem ausgewählten Blech des Trägerteils eingesetzt werden.

Die Bauteilkontur ist auch in dem Bereich der örtlichen erhöhten Blechdicke entsprechend der heute üblichen Umformmöglichkeiten frei wählbar.

Der Blechdickenzuwachs im Bereich der örtlichen Erhöhung der Blechdicke wird hinsichtlich der Festigkeit und Steifigkeit im Gegensatz zu der Blechdicke einer zusätzlichen, gefügten Verstärkung in vollem Umfang genutzt, und ein harmonischer Kräfteverlauf innerhalb des Verstärkungsbereichs und damit eine homogene Kraftübertragung wird erzielt.

Durch den mittels eines angestellten Bundes realisierbaren, fließenden Übergang vom Bereich erhöhter Blechdicke hin zum Bereich der Blechdicke des Trägerteils werden Kraftsprünge und somit gefährliche Spannungsspitzen vermindert.

Darüber hinaus besteht eine beliebige Wählbarkeit der Zonen erhöhter Blechdicke, so daß auch Verhältnissen mit besonders komplizierten Krafteinleitungszonen Rechnung getragen werden kann.

Die Erfindung eignet sich insbesondere für eine wirtschaftliche Herstellung von Karosserieblechbauteilen mit einer beliebigen Anzahl von gezielt angeordneten Durchzügen, wobei die Kontur des Bauteils beliebig gestaltet werden kann. Dabei werden die Durchzüge mit einer variabel wählbaren Grundfläche als Funktionsteile in eine Grundplatine als Trägerteil eingeschweißt. Die Grundplatine als Trägerteil kann vor dem Einschweißen der Funktionsteile (Durchzüge) bereits umgeformt sein oder das mit den Durchzügen versehene Trägerteil wird anschließend umgeformt. Besonders bei dem Einschweißen von Durchzügen in die Grundplatine empfiehlt es sich, die Ausnehmungen im Trägerteil mit einem angestellten Bund zu versehen.

Ebenso besteht die Möglichkeit, daß nur oder zusätzlich der einzuschweißende Durchzug als Funktionsteil am Rand seines Montageabschnittes einen abgestellten Rand aufweist. Auf diese Weise kann der Übergang zur Grundplatine oder zum fertig umgeformten Trägerteil angepaßt bzw. optimiert werden.

Die Blechdicke der Durchzüge, d.h. der Funktionsteile, muß - wie oben bereits bei der allgemeinen Beschreibung der Erfindung erwähnt - nicht der Blechdicke des Trägerteils entsprechen.

Vorstellbar ist, daß eine Auswahl verschiedener Standarddurchzüge als Standardfunktionsteile mit definierter Grundfläche in verschiedenen Blechdickenstufen als Basissortiment zur Gestaltung von Karosseriebauteilen mit gezielt angeordneten Durchzügen bereitgehalten wird. Die zugehörigen Trägerteile zur Herstellung der Karosserieblechbauteile werden je nach Anforderung mit diesen Standarddurchzügen versehen.

Aufgrund der erfindungsgemäßen Blechbauteile ergibt sich bei den im Karosserierohbau seit über einem Jahrzehnt verwendeten Durchzügen in Karosserieblechbauteilen, welche erfolgreich als Ersatz für konventionelle Schweißmutterlösungen eingesetzt wurden, ein erheblicher Fortschritt, sowohl im Hinblick auf die Einsparung von Herstellungskosten als auch im Hinblick auf eine gewichtssparende Bauweise.

Bei der herkömmlichen Lösung wurde im Kaltfließpreßverfahren aus einer Grundplatine eine Materialanhäufung in Form einer Tube angestaucht. Das Einschweißen einer Schweißmutter entfällt. Bedingt durch die massive Kaltumformung im Bereich der Tube weisen die Durchzüge gegenüber den Schweißmuttern deutlich höhere Festigkeitswerte auf.

Allerdings sind die erzielbaren Durchzugsgrößen u.a. von der Ausgangsblechdicke der Grundplatine abhängig. Die Anzahl der erforderlichen Umformstufen und die erforderlichen Pressenkräfte zur Erzeugung der Durchzüge sind meistens sehr hoch im Vergleich zu den erforderlichen Umformoperationen für die umliegenden Bauteilbereiche. Da zunächst die Durchzüge eines Bauteils aus der ebenen Grundplatine geformt werden müssen und darauf hin erst das Bauteil zur gewünschten Kontur umgeformt werden kann, ergibt sich eine relativ hohe Gesamtanzahl an Umformstufen. Je größer das Bauteil ausfällt, desto größer wird bei einer hohen Anzahl von Umformstufen der pressentechnische Aufwand, wodurch die Wirtschaftlichkeit des Verfahrens an ihre Grenzen stößt. Vor allem bei komplizierten Bauteilkonturen ist es sehr aufwendig, die in den ersten Fertigungsschritten erzeugten Durchzüge bei der Konturgebung des umliegenden Materials in der gewünschten Lage zu fixieren.

Gerade für diese Anwendungsfälle aber schafft das erfindungsgemäße Bauteil bzw. die im folgenden noch zu beschreibende erfindungsgemäße Herstellung solcher Bauteile Abhilfe.

Bei dem erfindungsgemäßen Verfahren zur Herstellung der zuvor beschriebenen Blechbauteile aus einem Trägerteil und einem Funktionsteil umfaßt die Herstellung das Trägerteil mit einer Ausnehmung zur Aufnahme eines hierzu komplementär ausgebildeten Montageabschnitts des Funktionsteils, wobei das Funktionsteil in seinem Montageabschnitt so bemessen wird, daß es in die Ausnehmung des Trägerteils fügespaltlos einpreßbar ist, das Einpressen des Funktionsteiles in dem Montageabschnitt, so daß das Funktionsteil in dem Trägerteil unverlierbar gehalten ist, und das Verschweißen der einander gegenüberliegenden Wandbereiche der Ausnehmung und des Montageabschnitts mittels Laser- oder Elektronenstrahl.

Vorzugsweise wird bei dem Einpressen des Funktionsteiles in das Tragteil eine Preßsitzverbindung zwischen Trägerteil und Funktionsteil hergestellt, welche frei von wasseraufnehmenden Kapillaren ist. Dies verlangt eine geringe Oberflächenrauhigkeit der Wandungen der Ausnehmung sowie des Montageabschnittes. Der große Vorteil hierbei ist, daß zum einen die Schweißzone, d.h. die Zone, in der Material des Trägerteils und Material des Funktionsteils aufgeschmolzen werden, sehr gering gehalten werden kann, und sichert andererseits die Herstellung einer extrem korrosionsunempfindlichen Schweißnaht zwischen Trägerteil und Funktionsteil.

Weiter bevorzugt wird die Preßsitzverbindung aus denselben Gründen wie oben genannt so hergestellt, daß sie gegenüber einer Wassersäule von 100 mm wasserdicht ist.

Bevorzugt wird die Verbindung von Trägerteil und Funktionsteil durchgeschweißt, so daß sich, bezogen auf die sich gegenüberliegenden Wandungen der Ausnehmung und des Montageabschnitts, eine ganzflächige Verschweißung von Trägerteil und Funktionsteil ergibt.

Diese und weitere Vorteile der Erfindung werden im folgenden anhand der Zeichnung noch näher erläutert. Es zeigen im einzelnen:
- Figur 1: eine Schnittansicht durch ein erfindungsgemäßes Blechbauteil;
- Figur 2: das Blechbauteil von Figur 1 vor dem Zusammenbau;
- Figur 3: eine weitere Ausführungsform des erfindungsgemäßen Blechbauteils;
- Figur 4: eine dritte Ausführungsform eines erfindungsgemäßen Blechbauteiles;
- Figur 5: eine Schnittansicht durch ein erfindungsgemäßes Blechbauteil; und
- Figur 6: eine Schnittansicht durch ein weiteres erfindungsgemäßes Blechbauteil nach einem Kaltumformschritt.

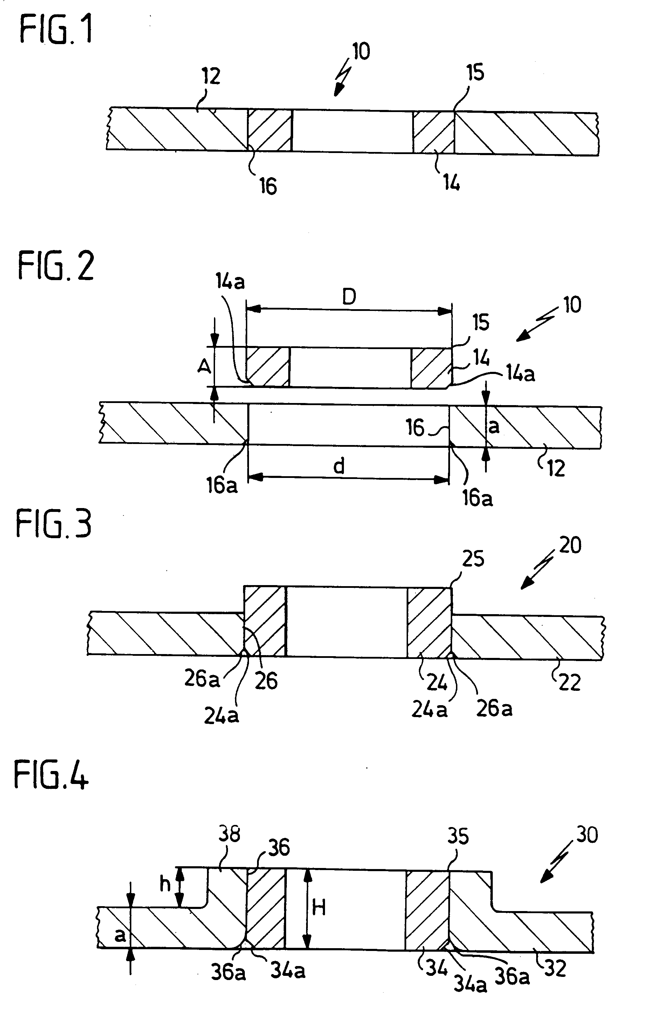

Figur 1 zeigt einen Ausschnitt eines erfindungsgemäßen Blechbauteiles 10 mit einem Trägerteil 12 und einem Funktionsteil 14, welches in einer als Durchbruch ausgestalteten Ausnehmung 16 des Trägerteils 12 angeordnet ist. Figur 1 beinhaltet zwar eine vereinfachte Darstellung eines erfindungsgemäßen Blechbauteils 10, zeigt jedoch, daß sich ein idealer bündiger Einbau des Funktionsteils in dem Trägerteil erfindungsgemäß realisieren läßt. Wichtig ist hierbei die fügespaltlose Einpressung des Funktionsteils 14 in die Ausnehmung 16 des Trägerteils 12. Der Schweißbereich, der die aneinanderliegenden Wandungen des Funktionsteiles 14 sowie der Ausnehmung 16 beinhaltet, ist extrem klein und vermeidet das Überragen von Schweißnahtanteilen über die Oberflächen des Trägerteils 12 bzw. des Montageabschnitts des Funktionsteils 14, insbesondere dann, wenn wie in Figur 2 gezeigt am Umfang der Ausnehmung 16 sowie gegebenenfalls am Umfang des Funktionsteils 14 ringsumlaufende Fasen 16a bzw. 14a vorgesehen werden. Die Fasen 16a und 14a bilden eine im zusammengesetzten Zustand der Funktions- und Trägerteile 14 und 16 eine rinnenförmige Schweißbadaufnahme, die beim Schweißvorgang dem Laser- bzw. Elektronenstrahl zugewandt wird. Beim Schweißvorgang füllt sich die rinnenförmige Schweißbadaufnahme mit flüssigem Material, so daß sich nach der Beendigung des Schweißens eine im wesentlichen ebene Oberfläche, wie in Figur 1 schematisch gezeigt, ergibt.

Günstig ist es, wenn der Durchmesser D des Montageabschnitts des Funktionsteils 14 in geringem Umfang größer gewählt wird als der Durchmesser d der Ausnehmung 16 des Trägerteils 12. Vorzugsweise wird hierbei eine Vorspannlast von ca. 1/10 mm gewählt, welche ausreichend ist, um eine fügespaltlose Einpressung des Funktionsteiles 14 in das Trägerteil 12 sicherzustellen.

Dies wird im folgenden anhand eines Zahlenbeispiels noch näher erläutert:

Trägerteil 12 mit einer Ausnehmung 16 mit einem Durchmesser d von 20 mm ± 0,02 mm Toleranz (maximale Toleranzwerte ± 0,05 mm)

Funktionsteil 14 mit einem Montageabschnitt mit einem Durchmesser D von 20,1 mm und einer Toleranz von + 0,03/- 0,01 mm.

Die zulässige Toleranz der Bohrung für die Ausnehmung 16 hängt von den zulässigen Toleranzwerten für den Außendurchmesser des Montageabschnitts des Funktionsteils 14 ab.

Beim Verschweißen mittels Laserstrahl wird vorzugsweise mit einem Laserstrahldurchmesser von 0,3 mm gearbeitet, der eine minimale Materialerwärmung und als Folge davon eine sehr hohe Schweißgeschwindigkeit möglich macht, da die Schweißnaht sehr schnell wieder erkaltet und dabei eine feste Verbindung zwischen Trägerteil 12 und Funktionsteil 14 schafft. Ein Wandern, d.h. eine Änderung der geometrischen Beziehung zwischen dem Funktionsteil 14 und dem Trägerteil 12, wie dies beim Laserschweißen unter Verwendung von Fügespalten möglich ist, ist hier ausgeschlossen.

Die Haltekraft, mit der das Funktionsteil 14 in dem Trägerteil 12 nach dem Einpressen gehalten ist, sollte vorzugsweise 50 kg oder mehr betragen. Für das Einpressen wird ein Einpreßdruck von ca. 5 t oder mehr verwendet.

Bei dieser Art des Einpressens können die zusammengesetzten Blechbauteile problemlos transportiert werden, ohne daß befürchtet werden muß, daß sich durch Erschütterungen beim Transport die Funktionsteile 14 aus den Trägerteilen 12 lösen oder auch nur gegeneinander verschieben und an einem anderen Ort verschweißt werden.

Durch die senkrechte Anordnung der Wandungen der Ausnehmung 16 sowie des Montageabschnitts des Funktionsteils 14 besteht die Möglichkeit, von der einen oder der anderen Oberfläche her zu schweißen, so daß dies je nach Geometrie des Blechbauteiles frei wählbar ist.

Die Vorspannung, mit der das Funktionsteil 14 in dem Trägerteil 12 gehalten ist, sollte ein Zwei- oder Mehrfaches des Eigengewichts des Funktionsteils betragen. Die Obergrenze für die Vorspannung liegt dort, wo unzulässige bzw. untolerierbare Verformungen des Trägers bzw. des Funktionsteils resultieren. Ein Durchschweißen, d.h. ein vollflächiges Verschweißen, der sich gegenüberliegenden Wandungen von Trägerteil und Funktionsteil ist zur Vorbeugung von Rißbildungen wichtig und mit dem erfindungsgemäßen Verfahren auch problemlos möglich.

Einer der wesentlichen Vorteile der vorliegenden Erfindung liegt darin, daß man mit der Ausnehmung 16 im Trägerteil 12 sehr nahe an Biegekanten herangehen kann, d.h. man kann die Ausnehmung 16 direkt neben dem Radius einer Biegung im Trägerteil 12 anordnen.

Figur 3 zeigt eine Variante eines erfindungsgemäßen Blechbauteiles 20, bei dem in ein Trägerteil 22 ein Funktionsteil 24 eingeschweißt ist. Das Funktionsteil 24 ist mit der in der Figur 3 gezeigten Unterseite des Trägerteils 12 bündig angeordnet, während es über die obenliegende Oberfläche des Trägerteils 22 hinaussteht. Am Trägerteil 22 sind entlang des Umfangs der Ausnehmung 26 und entlang des Umfangs des Funktionsteils 24 Fasen 26a bzw. 24a zur Bildung einer rinnenförmigen Schweißbadaufnahme vorgesehen.

Eine größere Verwindungssteifigkeit kann in diesem Fall erzielt werden, wenn das Blechbauteil entsprechend der Abbildung der Figur 4 variiert wird, welche ein erfindungsgemäßes Blechbauteil 30 zeigt, bei dem das Trägerteil 32 mit einer Ausnehmung 36 versehen ist, welche an ihrem Umfang ringsumlaufend einen angestellten Bund 38 aufweist. Die Höhe h des Bundes 38 ist dabei so gewählt, daß die Summe aus h + a = der Höhe H des Funktionsteils 34 beträgt. Hier kann der sich beim Anstellen des Bundes ergebende Radius 36a anstelle einer gesondert gefertigten Fase verwendet werden. Das Funktionsteil 34 wird mit einer umlaufenden Fase 34a versehen, welche gemeinsam mit dem Radius 36a die vorteilhafte Schweißbadaufnahme bildet.

Bei all diesen Beispielen ist als Funktionsteil 14 nur ein einfacher hohlzylindrischer Körper verwendet, jedoch ergibt sich aus der vorangehenden Beschreibung, daß das Funktionsteil beliebige Formen aufweisen kann, insbesondere beliebig komplizierte Formen, und auch aus verschiedenen Teilen, beispielsweise unter Verwendung des erfindungsgemäßen Verfahrens, zusammengesetzt sein kann.

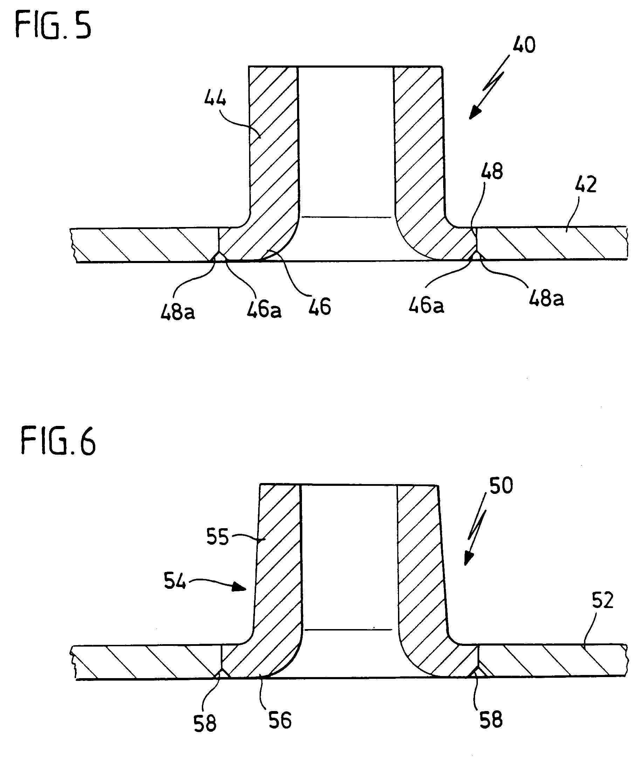

Die Figur 5 zeigt ein erfindungsgemäßes Bauteil 40 mit einem Trägerteil 42 und einem als Tube ausgebildeten Funktionsteil 44, welches mit seinem Bund 46 in einen Durchbruch 48 des Trägerteils 42 unverlierbar eingepreßt ist. Entlang des Durchbruchs 48 ist eine umlaufende Fase 48a vorgesehen und entlang des Umfangs des Bundes 46 eine Fase 46a, welche zusammen die Schweißbadaufnahme bilden.

Die Tube 44 mit dem Bund 46 ist dabei ein vorgefertigtes Funktionsteil.

Figur 6 zeigt schließlich ein erfindungsgemäßes Bauteil 50 mit einem Trägerteil 52 und einem Funktionsteil 54 in Form einer Tube 55 mit einem Bund 56, wobei die Tube 55 erst nach dem Beenden des Schweißvorgangs durch einen Kaltumformschritt gebildet wurde, was an der sich verjüngenden Wandung der Tube 55 zu ihrem dem Trägerteil 52 abgewandten Ende hin deutlich wird. Die von Fasen 52a und 56a gebildete Schweißbadaufnahme 58 ist in Figur 6 gefüllt gezeichnet, wie sie sich nach Beendigung des Schweißvorgangs ergibt.

## Patentansprüche

1. Blechbauteil, insbesondere Kfz-Karosserieteil, mit lasttragender oder lastaufnehmender Funktion, mit einem Trägerteil und mit einem Funktionsteil, wobei das Trägerteil (12) eine Ausnehmung (16) zur Aufnahme eines hierzu komplementär ausgebildeten Montageabschnitts des Funktionsteils (14) umfaßt, wobei die im zusammengebauten Zustand des Blechbauteils (10) gegenüberliegende Wandung der Ausnehmung (16) und des Montageabschnitts (15) im wesentlichen senkrecht zu der Ausnehmung umgebenden Oberfläche des Trägerteils (12) angeordnet ist, wobei die Abmessungen der Ausnehmung (16) und des Montageabschnitts (15) so bemessen sind, daß das Funktionsteil (14) mit seinem Montageabschnitt unverlierbar und fügespaltlos in die Ausnehmung (16) des Trägerteils (12) einpreßbar ist, und wobei das Funktionsteil (14) mit dem Trägerteil (12) im Bereich ihrer sich gegenüberliegenden Wandungen von Montageabschnitt und Ausnehmung laser- oder elektronenstrahlverschweißt ist.

2. Bauteil nach Anspruch 1, dadurch gekennzeichnet, daß die Abmessungen der Ausnehmung (16) und des Montageabschnitts (15) so bemessen sind, daß deren sich gegenüberliegende Wandungen ganzflächig aneinander anliegen.

3. Bauteil nach einem der Ansprüche 1 oder 2, dadurch gekennzeichnet, daß die Abmessungen der Ausnehmung (16) und des Montageabschnitts (15) so bemessen sind, daß das Funktionsteil (14) im Preßsitz in dem Trägerteil (12) mit einer Vorspannung gehalten ist, derart, daß beim Aufschmelzen der den gegenüberliegenden Wandungen benachbarten Bauteilbereiche während des Verschweißvorgangs die geometrische Lage des Funktionsteils (14) gegenüber dem Trägerteil (12) erhalten bleibt.

4. Bauteil nach einem der voranstehenden Ansprüche, dadurch gekennzeichnet, daß die Wandstärke des Montageabschnitts (15) größer ist als die Wandstärke des Trägerteils (12).

5. Bauteil nach Anspruch 4, dadurch gekennzeichnet, daß das Trägerteil (12) am Umfang der Ausnehmung (16) zumindest teilweise einen angestellten Bund (38) umfaßt.

6. Bauteil nach einem der voranstehenden Ansprüche, dadurch gekennzeichnet, daß das Funktionsteil (14) aus zwei oder mehr separat hergestellten Teilen zusammengesetzt ist.

7. Bauteil nach einem der voranstehenden Ansprüche, dadurch gekennzeichnet, daß das Trägerteil (12) mit dem Funktionsteil (14) zonenweise verschweißt ist.

8. Bauteil nach einem der voranstehenden Ansprüche, dadurch gekennzeichnet, daß das Trägerteil (12) und das Funktionsteil (14) gasdicht miteinander verschweißt sind.

9. Bauteil nach einem der voranstehenden Ansprüche, dadurch gekennzeichnet, daß das Trägerteil (12) entlang des Umfangs der Ausnehmung (16) und/oder das Funktionsteil (14) entlang seinem Umfang eine umlaufende Fase (14a; 16a) aufweist, die eine Schweißbadaufnahme bildet/bilden.

10. Verfahren zur Herstellung eines Blechbauteils, insbesondere eines Kfz-Karosserieteils, mit lasttragender oder lastaufnehmender Funktion, aus einem Trägerteil (12) und einem Funktionsteil (14), wobei das Trägerteil (12) eine Ausnehmung (16) zur Aufnahme eines hierzu komplementär ausgebildeten Montageabschnitts (15) des Funktionsteils (14) umfaßt, mit den Schritten:
Bemessen des Funktionsteils (14) in seinem Montageabschnitt (15), so daß es in die Ausnehmung (16) des Trägerteils (12) fügespaltlos einpreßbar ist;
Einpressen des Funktionsteils (14) mit seinem Montageabschnitt (15) in die Ausnehmung (16) des Trägerteils (12), so daß das Funktionsteil (14) in dem Trägerteil (12) unverlierbar gehalten ist; und
Verschweißen der einander gegenüberliegenden Wandbereiche der Ausnehmung (16) und des Montageabschnitts (15) mittels Laser- oder Elektronenstrahl.

11. Verfahren nach Anspruch 10, dadurch gekennzeichnet, daß das Funktionsteil so in das Trägerteil eingepreßt wird, daß zwischen Trägerteil (12) und Funktionsteil (14) eine Preßsitzverbindung hergestellt wird, die frei von wasseraufnehmenden Kapillaren ist.

12. Verfahren nach Anspruch 11, dadurch gekennzeichnet, daß die Preßsitzverbindung gegenüber einer Wassersäule von 100 mm wasserdicht ist.

13. Verfahren nach einem der Ansprüche 10 bis 12, dadurch gekennzeichnet, daß die Verbindung von Trägerteil und Funktionsteil durchgeschweißt ist.

14. Verfahren nach einem der Ansprüche 10 bis 13, dadurch gekennzeichnet, daß beim Verschweißen der einander gegenüberliegenden Wandbereiche ein Laser- oder Elektronenstrahl mit einem Durchmesser von ca. 0,2 bis 0,5 mm, vorzugsweise von 0,3 mm, verwendet wird.

## Claims

1. Sheet-metal component, in particular a motor vehicle body part, with a load-bearing or load-absorbing function, comprising a bearing part and a functional part, wherein the bearing part (12) comprises a recess (16) for receiving an assembly section of the functional part (14) designed to be complementary thereto, wherein the walls of the recess (16) and of the assembly section (15) facing one another in the assembled state of the sheet-metal component (10) are arranged essentially at right angles to the surface of the bearing part (12) surrounding the recess, wherein the dimensions of the recess (16) and of the assembly section (15) are dimensioned such that the functional part (14) is adapted to be pressed into the recess (16) of the bearing part (12) with its assembly section undetachably and without any seam gap, and wherein the functional part (14) is welded to the bearing part (12) by a laser or electron beam in the region of their facing walls of assembly section and recess.

2. Component as defined in claim 1, characterized in that the dimensions of the recess (16) and of the assembly section (15) are dimensioned such that their facing walls abut on one another over the entire surface area.

3. Component as defined in either one of claims 1 or 2, characterized in that the dimensions of the recess (16) and of the assembly section (15) are dimensioned such that the functional part (14) is held in a press fit in the bearing part (12) with an initial tension in such a manner that during fusing of the component regions adjacent to the facing walls during the welding process the geometrical position of the functional part (14) in relation to the bearing part (12) is retained.

4. Component as defined in any one of the preceding claims, characterized in that the wall thickness of the assembly section (15) is greater than the wall thickness of the bearing part (12).

5. Component as defined in claim 4, characterized in that the bearing part (12) comprises a bent shoulder (38) at the circumference of the recess (16), at least partially.

6. Component as defined in any one of the preceding claims, characterized in that the functional part (14) is composed from two or more separately produced parts.

7. Component as defined in any one of the preceding claims, characterized in that the bearing part (12) is welded to the functional part (14) in zones.

8. Component as defined in any one of the preceding claims, characterized in that the bearing part (12) and the functional part (14) are welded to one another so as to be gastight.

9. Component as defined in any one of the preceding claims, characterized in that the bearing part (12) has along the circumference of the recess (16) and/or the functional part (14) along its circumference a circumferential bevel (14a; 16a) forming a welding puddle receiving means.

10. Process for the production of a sheet-metal component, in particular a motor vehicle body part, with a load-bearing or load-absorbing function, consisting of a bearing part (12) and a functional part (14), wherein the bearing part (12) comprises a recess (16) for receiving an assembly section (15) of the functional part (14) designed toe be complementary thereto, comprising the steps:
Dimensioning the functional part (14) in its assembly section (15) such that it is adapted to be pressed into the recess (16) of the bearing part (12) without any seam gap;
Pressing the functional part (14) with its assembly section (15) into the recess (16) of the bearing part (12) such that the functional part (14) is held in the bearing part (12) so as to be undetachable; and
Welding the wall areas of the recess (16) and the assembly section (15) facing one another by means of a laser or electron beam.

11. Process as defined in claim 10, characterized in that the functional part is pressed into the bearing part such that a press fit connection is produced between bearing part (12) and functional part (14), said connection being free from water-absorbing capillaries.

12. Process as defined in claim 11, characterized in that the press fit connection is watertight in relation to a water column of 100 mm.

13. Process as defined in any one of claims 10 to 12, characterized in that the connection of bearing part and functional part is welded through.

14. Process as defined in any one of claims 10 to 13, characterized in that during welding of the facing wall regions a laser or electron beam with a diameter of approximately 0.2 to 0.5 mm, preferably 0.3 mm, is used.

## Revendications

1. Pièce en tôle, en particulier pièce de carrosserie pour véhicule automobile dont la fonction est de porter ou de recevoir une charge, comportant une pièce de support et une pièce fonctionnelle, la pièce de support (12) présentant un évidement (16) pour recevoir un tronçon de montage, réalisé de façon complémentaire, de la pièce fonctionnelle (14), les parois de l'évidement (16) et du tronçon de montage (15), situées mutuellement en vis-à-vis dans l'état assemblé de la pièce en tôle (10), étant agencées sensiblement perpendiculairement à la surface de la pièce de support (12) qui entoure l'évidement, les dimensions de l'évidement (16) et du tronçon de montage (15) étant choisies de telle sorte que la pièce fonctionnelle (14) est susceptible d'être enfoncée de façon imperdable et sans fente de jointure par son tronçon de montage dans l'évidement (16) de la pièce de support (12), et la pièce fonctionnelle (14) étant soudée par faisceau laser ou faisceau d'électrons avec la pièce de support (12) dans la région des parois mutuellement en vis-à-vis du tronçon de montage et de l'évidement.

2. Pièce selon la revendication 1, caractérisée en ce que les dimensions de l'évidement (16) et du tronçon de montage (15) sont choisies de telle sorte que leurs parois mutuellement en vis-à-vis s'appuient par toute leur surface l'une contre l'autre.

3. Pièce selon l'une ou l'autre des revendications 1 et 2, caractérisée en ce que les dimensions de l'évidement (16) et du tronçon de montage (15) sont choisies de telle sorte que la pièce fonctionnelle (14) est retenue avec ajustement serré dans la pièce de support (12) sous une précontrainte telle que lors de la fusion des régions de pièce voisines des parois mutuellement en vis-à-vis pendant l'opération de soudage, la position géométrique de la pièce fonctionnelle (14) par rapport à la pièce de support (12) reste exactement maintenue.

4. Pièce selon l'une quelconque des revendications précédentes, caractérisée en ce que l'épaisseur de la paroi du tronçon de montage (15) est supérieure à l'épaisseur de la paroi de la pièce de support (12).

5. Pièce selon la revendication 4, caractérisée en ce que la pièce de support (12) comporte sur la périphérie de l'évidement (16) au moins en partie une collerette redressée (38).

6. Pièce selon l'une quelconque des revendications précédentes, caractérisée en ce que la pièce fonctionnelle (14) est composée de deux ou plusieurs pièces réalisées séparément.

7. Pièce selon l'une quelconque des revendications précédentes, caractérisée en ce que la pièce de support (12) est soudée par zones avec la pièce fonctionnelle (14).

8. Pièce selon l'une quelconque des revendications précédentes, caractérisée en ce que la pièce de support (12) et la pièce fonctionnelle (14) sont soudées l'une avec l'autre de manière étanche aux gaz.

9. Pièce selon l'une quelconque des revendications précédentes, caractérisée en ce que la pièce de support (12) comporte le long de la périphérie de l'évidement (16), et/ou la pièce fonctionnelle (14) comporte le long de sa périphérie un chanfrein périphérique (14a ; 16a) qui forme/forment une réception pour la soudure liquide.

10. Procédé pour réaliser une pièce en tôle, en particulier une pièce de carrosserie pour véhicule automobile dont la fonction est de porter ou de recevoir une charge, comportant une pièce de support (12) et une pièce fonctionnelle (14), la pièce de support (12) présentant un évidement (16) pour recevoir un tronçon de montage (15), réalisé de façon complémentaire à cet évidement, de la pièce fonctionnelle (14), comprenant les étapes suivantes :
- on dimensionne la pièce fonctionnelle (14) dans son tronçon de montage (15) de telle sorte qu'elle est susceptible d'être enfoncée sans fente de jointure dans l'évidement (16) de la pièce de support (12);
- on enfonce la pièce fonctionnelle (14) avec son tronçon de montage (15) dans l'évidement (16) de la pièce de support (12), de sorte que la pièce fonctionnelle (14) est retenue de façon imperdable dans la pièce de support (12) ; et
- on soude les régions de paroi mutuellement en vis-à-vis de l'évidement (16) et du tronçon de montage (15) au moyen d'un faisceau laser ou faisceau d'électrons.

11. Procédé selon la revendication 10, caractérisé en ce que l'on enfonce la pièce fonctionnelle de telle sorte dans la pièce de support que l'on établit une liaison par ajustement serré entre la pièce de support (12) et la pièce fonctionnelle (14), qui est exempte de capillaires recevant de l'eau.

12. Procédé selon la revendication 11, caractérisé en ce que la liaison par ajustement serré est étanche à l'eau par rapport à une colonne d'eau de 100 mm.

13. Procédé selon l'une quelconque des revendications 10 à 12, caractérisé en ce que la liaison de la pièce de support et de la pièce fonctionnelle est soudée en continu.

14. Procédé selon l'une quelconque des revendications 10 à 13, caractérisé en ce que lors du soudage des zones de paroi mutuellement en vis-à-vis, on utilise un faisceau laser ou faisceau d'électrons d'un diamètre d'environ 0,2 à 0,5 mm, de préférence de 0,3 mm.
